# EUROPÄISCHE PATENTANMELDUNG

(11) **EP 2 821 206 A1**
(43) Veröffentlichungstag der Anmeldung: **07.01.2015**
(21) Anmeldenummer: 14175299.8
(22) Anmeldetag: 01.07.2014
(51) Int. Cl.: B29C 65/06, B29C 65/78

(54) **Bauteilzentrierung**

(30) Priorität: 01.07.2013 DE 102013106898
(71) Anmelder: Gealan Formteile GmbH, 95145 Oberkotzau (DE)
(72) Erfinder: Laubmann, Gerhard, 95119 Naila (DE)
(74) Vertreter: Fleuchaus, Michael A.

(57) **Zusammenfassung**

Die Erfindung betrifft eine Bauteilzentrierungseinrichtung für zu fügende Bauteile, vorzugsweise Kunststoffbauteile, aufweisend wenigstens einen an einem ersten Bauteil (1) angeordneten stiftförmigen Zentriervorsprung (10) und wenigstens eine hierzu korrespondierende, an einem zweiten Bauteil (2) angeordnete Zentrierausnehmung (20), wobei vor Beginn des Fügeprozesses das erste und zweite Bauteil (1, 2) im Wesentlichen satt aneinander in Anlage gebracht werden, so dass jeder Zentriervorsprung (10) in eine jeweils korrespondierende Zentrierausnehmung (20) im wesentlichen vollständig eingreift, und wobei im Bereich des Fußes des Zentriervorsprungs (10) ein Trennbereich (35) vorgesehen ist, in welchem der Zentriervorsprung (10) vom ersten Bauteil (1) durch eine definierte Querkraft trennbar ist, und eine Trennung des Zentriervorsprungs (10) vom ersten Bauteil (1) durch eine während des Fügeprozesses auf den Zentriervorsprung (10) wirkende Querkraft, die größer als die definierte Querkraft ist erfolgt.

## Beschreibung

Die vorliegende Erfindung betrifft eine Einrichtung zur Bauteilzentrierung für zu fügende Bauteile, vorzugsweise Kunststoffbauteile. Insbesondere betrifft die vorliegende Erfindung eine Einrichtung zur Bauteilzentrierung zur Verwendung mit einem Kunststoff-Reibschweißverfahren.

Hohlraumumschließende Kunststoffkomponenten, wie beispielsweise Lautsprecher-Gehäuse oder Fluidleitungssysteme werden häufig aus mehreren Kunststoffbauteilen durch Fügen derselben hergestellt. Dabei handelt es sich mitunter um Kunststoffbauteile, welche eine erhebliche Größe in einer Haupterstreckungsrichtung haben und hierdurch fertigungsbedingten Verzug und damit Abweichungen von der Maßhaltigkeit aufweisen.

Beim Einbringen derartiger Kunststoffbauteile in eine Fügemaschine, wie beispielsweise eine Reibschweißmaschine, kann es aufgrund der Abweichungen von der Maßhaltigkeit dazu kommen, dass die Kunststoffbauteile nicht exakt in den Bauteilaufnahmen der Fügemaschine positioniert werden können, da die negativ-Kontur der Bauteilaufnahme nicht der positiv-Kontur des Bauteils entspricht. Dies wiederum kann zu Fehlern beim Fügen der Kunststoffbauteile führen, da diese nicht vorgabengemäß zueinander positioniert sind und damit die Anfangsbedingungen des Fügeprozesses einer starken Ungenauigkeit unterliegen.

Aufgabe der vorliegenden Erfindung ist es daher, eine Bauteilzentrierungseinrichtung zur Verfügung zu stellen, die die im Stand der Technik bekannten Probleme zumindest teilweise überwindet und insbesondere eine exakte Positionierung von zu fügenden Bauteilen zueinander gewährleistet, damit der Fügeprozess mit definierten Anfangsbedingungen beginnen kann.

Diese Aufgabe wird durch eine Bauteilzentrierungseinrichtung gemäß dem unabhängigen Anspruch 1 gelöst. Ein erfindungsgemäßes Fügeverfahren sowie eine erfindungsgemäße Verwendung der erfindungsgemäßen Bauteilzentrierungseinrichtung sind Gegenstand der unabhängigen Ansprüche 12 und 14. Ausführungsformen der Erfindung sind Gegenstand der jeweiligen abhängigen Ansprüche.

Danach weist eine Bauteilzentrierungseinrichtung für zu fügende Bauteile gemäß dervorliegenden Erfindung wenigstens einen an einem ersten Bauteil angeordneten stiftförmigen Zentriervorsprung und wenigstens eine hierzu korrespondierende, an einem zweiten Bauteil angeordnete Zentrierausnehmung, wobei vor Beginn des Fügeprozesses das erste und zweite Bauteil im Wesentlichen satt aneinander in Anlage gebracht werden, so dass jeder Zentriervorsprung in eine jeweils korrespondierende Zentrierausnehmung im wesentlichen vollständig eingreift.

Erfindungsgemäß ist im Bereich des Fußes des Zentriervorsprungs ein Trennbereich vorgesehen, in welchem der Zentriervorsprung vom ersten Bauteil durch eine definierte Querkraft trennbar ist, und an dem eine Trennung des Zentriervorsprungs vom ersten Bauteil durch eine während des Fügeprozesses auf den Zentriervorsprung wirkende Querkraft, die größer als die definierte Querkraft ist erfolgt.

In Erfindungsgemäßer Weise ist erkannt worden, dass durch die Kombination des exakten Positionierens von zu fügenden Bauteilen zueinandervor Beginn des Fügeprozesses durch die Kombination aus Zentriervorsprung und Zentrierausnehmung und das hiernach während des Fügeprozesses erfolgende Abtrennen des Zentriervorsprungs eine verbesserte Qualität und Reproduzierbarkeit des Fügeprozesses erreicht werden können. Damit wird auch das Problem des Standes der Technik überwunden, wonach die Aufnahme von mit Verzug beaufschlagen Bauteilen in der Fügemaschine zu einer Falschpositionierung der Bauteile vor, während und nach dem Fügeprozess führen kann.

Insbesondere erfolgt die Positionierung der Kunststoffbauteile zueinander vor Beginn des Fügeprozesses innerhalb der Fügemaschine nichtmehr aufgrund der durch die Fügemaschine vorgegebenen Geometrien der Bauteilaufnahmen sondern durch die Kunststoffbauteile selbst, d.h. die hieran angeordnete Bauteilzentrierungseinrichtung. Erst nach erfolgter, exakter Positionierung derzu fügenden Bauteile zueinander erfolgt eine Fixierung der Bauteile in den Bauteilaufnahmen der Fügemaschine durch bekannte Mittel wie z.B. Vakuum-Aufnahme oder dergleichen, so dass der Fügeprozess durchweg von definierten Anfangsbedingungen aus startet.

Um den Fügeprozess selbst aber nicht zu stören erfolgt währen des Fügens allerdings ein Abtrennen des Zentriervorsprungs oder der Zentriervorsprünge, so dieser bzw. diese im weiteren Verlauf des Fügeprozesses keine weitere Auswirkung(en) mehr auf den Fügeprozess hat bzw. haben und insbesondere die Wahl der Parameter des Fügeprozesses selbst, wie z.B. die Amplitude beim Reibschweißen, nicht beeinträchtigen.

Das Abtrennen des Zentriervorsprungs erfolgt bevorzugt durch ein Abscheren an geometrischen Elementen des zweiten Bauteils, wie z.B. an einer Schulter der Zentrierausnehmung oder aber auch durch ein Abbrechen. Allerdings ist im Falle des Abscherens an einem geometrischen Element eine erhöhte Genauigkeit des Trennvorgangs zu erzielen, insbesondere eine genauere Vorgabe des Trennlinienverlaufs. Für den Fall des Reibschweißens ist somit bevorzugt der Durchmesser der Zentrierausnehmung kleiner als die Reibschweißamplitude gewählt ist, wodurch es während des Reibschweißprozesses zu einem Abtrennen des Zentriervorsprungs durch die die Zentrierausnehmung begrenzenden Wandungen kommt.

Bei einer Ausführungsform der Erfindung ist der am ersten Bauteil angeordnete Zentriervorsprung einstückig mit dem Bauteil verbunden. Dies erlaubt zunächst neben einer Verliersicherheit auch eine besonders gute Steuerung der definierten Querkraft, durch welche der Zentriervorsprung im Trennbereich vom ersten Bauteil abtrennbar ist. Schließlich erlaubt diese Ausführungsform auch eine besonders vorteilhafte Herstellung des ersten Bauteils, beispielsweise im Spritz- oder Druckguss.

Bei einerweiteren Ausführungsform der Erfindung ist die Zentrierausnehmung topfförmig ausgebildet. Dies erhöht einerseits die Stabilität der die Zentrierausnehmung definierenden Wandungen, welche, um die Abtrennung des Zentriervorsprungs zu bewirken eine so hohe Stabilität in Querrichtung aufweisen müssen, dass sie durch eine Kraftwirkung auf den Zentriervorsprung auf diesen die Querkraft zum Abtrennen des Zentriervorsprungs übertragen, also eine Querkraft, die größer ist als die definierte Querkraft, andererseits wird hierdurch der Zentriervorsprung nach dessen Abtrennung aufgefangen, so dass dieser weder in der Fügemaschine verbleibt noch im Anschluss an den Fügeprozess verloren werden kann.

Optional ist die Zentrierausnehmung zum Topfboden hin konisch zulaufend ausgebildet, wodurch das Positionieren des ersten Bauteils gegenüber dem zweiten Bauteil einerseits vereinfacht andererseits aber auch genauer wird, da durch das Einschieben des Zentriervorsprungs in die Zentrierausnehmung eine zunächst geringfügig ungenaue Positionierung der beiden Bauteile zueinander (die beim Eintritt der Zentriervorsprünge in die Zentrierausnehmungen noch möglich ist) auf die exakt vorgegebene Positionierung hin fokussiert wird. Dies ist insbesondere auch dann der Fall, wenn, wie bei einer weitere Ausführungsform, der Zentriervorsprung einen in Richtung vom ersten Bauteil weg sich verringernden, vorzugsweise kegelstumpfförmig zulaufenden Querschnitt aufweist, der eine noch höhere Genauigkeit der Positionierung der beiden Bauteile zueinander bei vollständig eingeschobenem Zentriervorsprung ermöglicht.

In einer alternativen Ausführungsform ist die Zentrierausnehmung eine Durchführung durch das zweite Bauteil. Bei dieserAusführungsform besteht, anders als im Fall der topfförmigen Zentrierausnehmung, gerade der Wunsch, dass der Zentriervorsprung beim Abtrennen vom zweiten Bauteil nicht im Bauteil verbleibt sondern ausgegeben wird, beispielsweise über eine entsprechende Abfuhreinrichtung in der Fügemaschine.

Auf diese Weise kann vermieden werden, dass ein möglicherweise locker in der Zentrierausnehmung zu liegen kommender abgetrennter Zentriervorsprung Klappergeräusche beim Bewegen der fertig gefügten Kunststoffkomponente verursacht, oder aber, beispielsweise im Falle eines Lautsprechergehäuses, in eine Resonanzschwingung versetzt wird, was ebenfalls eine unerwünschte Geräuschbildung zur Folge hätte. Außerdem kann durch dasAbführen des abgetrennten Zentriervorsprungs in der Fügemaschine eine Rezyklierung des Materials des Zentriervorsprungs vorgenommen werden.

Optional kann sich hierbei eine die Zentrierausnehmung in Form einer Durchführung verlängernde Wandung im wesentlichen zylinder- oder auch kegelstumpfförmig von der Rückseite des zweiten Bauteils - also der dem ersten Bauteil gegenüber liegenden Seite des zweiten Bauteils - weg erstrecken. Für den Fall dass eine erhöhte definierte Querkraft erforderlich ist können hierbei als Weiterbildung auch zumindest Teilbereiche der die Zentrierausnehmung begrenzenden Wandung durch Stützrippen und/oder Materialanhäufungen, beispielsweise in Form einer Kalotte, verstärkt sein.

Bei einerweiteren Ausführungsform weist der Zentriervorsprung im Bereich seines Fußes eine radiale Einschnürung oder auch Einkerbung auf. Die Einschnürung bzw. Einkerbung kann, muss dies aber nicht, radial umlaufend sein, wodurch es möglich ist, durch unterschiedlich tiefe Einschnürungen bzw. Einkerbungen, für unterschiedliche Richtungen verschieden hohe definierte Querkräfte vorzusehen. Somit kann sicher gestellt werden, dass die Zentriervorrichtung zwar durch eine die definierte Querkraft in einer vorgegebenen ersten Richtung übersteigende Querkraft abgetrennt werden kann, jedoch eine Abtrennung in einer hierzu orthogonalen zweiten Richtung nicht oder erst beim Auftreten höherer Querkräfte in der zweiten Richtung erfolgt.

Es ist damit möglich, erfindungsgemäße Bauteilzentriereinrichtungen vorzusehen, die einerseits eine hohe Zentrierwirkung in einerzweiten Richtung aufweisen, selbst wenn dies unter Spannung geschieht, gleichzeitig aber bei einer Bewegung in einer erster Richtung der Zentriervorsprung, wie erfindungsgemäß vorgesehen, durch eine Querkraft, die größer als die definierte Querkraft des Trennbereichs in der ersten Richtung ist, abgetrennt wird.

Bei einer Weiterbildung ist die Einschnürung bzw. Einkerbung durch die Oberflächenebene des ersten Bauteils hindurch in dieses hinein versetzt, d.h. dass die Einschnürung bzw. Einkerbung ist zwar, wie zuvor beschrieben, am Fuß des Zentriervorsprungs vorgesehen, jedoch ist die den Fuß bildende Basis des Zentriervorsprungs in das Material des ersten Bauteils hinein "versenkt", so dass die Kerbwirkung der Einschnürung bzw. Einkerbung am Trennbereich so angreift, dass ein Abtrennen des Zentriervorsprungs "innerhalb" des ersten Bauteils erfolgt. Auf diese Wiese kann sicher gestellt werden, dass auch im Falle des Auftretens unregelmäßiger Trennlinien, beispielsweise bei einer Ausbeulung, kein Materialüberstand über die Oberflächenebene des ersten Bauteils hinaus bestehen bleibt.

Bei einer Ausführungsform der Erfindung ist der Zentriervorsprung mit dem ersten Bauteil stoffschlüssig verbunden, beispielsweise durch Schweißen, kalt-Schweißen, Vulkanisieren oder Kleben. Insbesondere ist auch möglich, den Zentriervorsprung, beispielsweise beim Kunststoffspritzguss, anzuspritzen oder aber, im Metall-Gussverfahren, anzugießen.

Bei einer Weiterbildung dieser Ausführungsform wird der Zentriervorsprung im Spritzgussprozess in einem weiteren Spritzgang an das in einem vorhergehenden Spritzgang gebildete erste Bauteil noch im gleichen Werkzeug angespritzt. Hierdurch kommt es zwar zu einer innigen Verbindung zwischen erstem Bauteil und Zentriervorsprung im Sinne einer Einstückigkeit bzw. eines Stoffschlusses, jedoch wird aufgrund des Aufspritzens des Zentriervorsprungs im zweiten Spritzgang auf die bereits teilweise erstarrte Kunststoffkomponente des ersten Spritzgangs ein Trennbereich gebildet, der eine im Wesentlichen eine genaue Trennlinie aufweist, entlang derer sowohl die definierte Querkraft sehr genau bestimmt werden kann als auch sicherstellbar ist, dass ein Abtrennen des Zentriervorsprungs ohne wesentlichen Materialüberstand und sauber erfolgt.

Bei einer weiteren Ausführungsform sind der Zentriervorsprung und/oder der Trennbereich aus einem Material gefertigt ist, welches Materialeigenschaften aufweist, die verschieden sind von den Materialeigenschaften des ersten Bauteils ist, und beispielsweise eine vom ersten Bauteil abweichende Elastizität, spezifische Dichte, Sprödigkeit, Härte, oder Plastizität aufweist.

Bei einer Ausführungsform weisen der Zentriervorsprung und die jeweils hierzu korrespondierende Zentrierausnehmung einen kreisförmigen Querschnitt auf. Auf diese Weise ist die Zentrierwirkung rotationsunabhängig und erfolgt in jeder Rotationslage des ersten und zweiten Bauteils zueinander bezüglich einer Rotationsachse entlang der Haupterstreckungsrichtung des Zentriervorsprungs lediglich in translatorischer Richtung.

Alternativ hierzu weist der Zentriervorsprung einen elliptischen, dreieckigen, rechteckigen, kreuzförmigen oder dergleichen ähnlichen, nicht rotationssymmetrischen Querschnitt auf. Hierdurch wird es möglich, dass die Zentrierwirkung der Bauteilzentriereinrichtung nicht lediglich translatorischer Natur ist sondern auch eine exakte Positionierung des ersten und zweiten Bauteils im Hinblick auf eine vorgegebene Winkellage zueinander ermöglicht wird. Somit findet bei dieser Ausführungsform nicht lediglich eine translatorische Zentrierung statt sondern auch eine rotatorische Richtigstellung.

Bei einer Ausführungsform der Erfindung ist am Zentriervorsprung wenigstens ein Dämpfungselement vorgesehen, welches sich über den Durchmesser des Zentrierelements (10) hinaus erstreckt. Das Dämpfungselement ist dabei bevorzugt aus einem Elastomer gefertigt und beispielsweise als an der Oberfläche des Zentriervorsprungs angebrachter kalottenförmiger Punkt ausgebildet oder aber als sich um den Zentriervorsprung herum erstreckender Ring. Gleichermaßen kann das Dämpfungselement auch als den Zentriervorsprung teilende Schicht in diesen eingearbeitet sein. Das Dämpfungselement dient hierbei der Verminderung von Klappergeräuschen bei Ausführungsformen, bei denen der abgetrennte Zentriervorsprung nach dem Fügeprozess in der fertigen Kunststoffkomponente - genauer gesagt, der Zentrierausnehmung - verbleibt, wie weiter oben beschrieben wurde.

Bei einer Weiterbildung ist das Dämpfungselement so ausgeführt, dass hierdurch eine kraftschlüssiges Eingreifen des Zentriervorsprungs innerhalb der Zentrierausnehmung erfolgt. Der Zentriervorsprung mit dem oderden Dämpfungselementen wird in diesem Fall beim aneinander anlegen des ersten und zweiten Bauteils mit einer gewissen Kraft in die Zentrierausnehmung gedrückt, wodurch ein "Verklemmen" des Zentriervorsprungs in der Zentrierausnehmung erfolgt. Aufgrund der Elastizität der Dämpfungselemente ist dennoch ein Abtrennen des Zentriervorsprungs vom ersten Bauteil möglich, beispielsweise durch ein Abscheren im Trennbereich, wonach das Zentrierelement in der Zentrieraufnahme klemmen bleibt und dadurch ebenfalls die Ausbildung von Geräuschen unterbunden wird, seien dies Klapper oder Vibrationsgeräusche.

Es wird zudem auch ein erfindungsgemäßes Fügeverfahren zur maßhaltigen Verbindung von Kunststoffbauteilen unter Verwendung einer zuvor beschriebenen Bauteilzentrierungseinrichtung offenbart, wobei das Fügeverfahren die folgenden Schritte umfasst: Einbringen des ersten und zweiten Bauteils in eine Fügemaschine, wobei das erste und zweite Bauteil so zueinander angeordnet und zusammengeführt werden, dass jeder Zentriervorsprung in eine jeweils korrespondierende Zentrierausnehmung im wesentlichen vollständig eingreift; Zufahren der Bauteilaufnahmen der Fügemaschine, so dass das erste und zweite Bauteil im Wesentlichen satt aneinander in Anlage gebracht werden und fixieren der Bauteile in den Bauteilaufnahmen; und Starten des Fügeprozesses, wobei während des Fügeprozesses eine auf den Zentriervorsprung wirkende Querkraft wirkt, die größer als die definierte Querkraft ist und hierdurch ein Abtrennen des Zentriervorsprungs vom ersten Bauteil im Trennbereich erfolgt.

Bevorzugt umfasst das erfindungsgemäße Fügeverfahren einen Reibschweißprozess in einer Reibschweißmaschine, wobei die Reibschweißmaschine vorzugsweise so ausgelegt ist, dass zumindest eines der beiden Bauteile in der jeweiligen Bauteilaufnahme mit einem gewissen Spiel aufgenommen werden kann,jedoch während des Fügeprozesses fest in der Aufnahme sitzt. dies kann in an sich bekannter Weise zum Beispiel durch eine Vakuum-Aufnahme der Bauteile in der Bauteilaufnahme erfolgen.

Weitere Vorteile und Merkmale der vorliegenden Erfindung ergeben sich aus der nachfolgenden detaillierten Beschreibung von Ausführungsformen der Erfindung unter Bezugnahme auf die Figuren. Es zeigen:
- Fig. 1: eine erfindungsgemäße Bauteilzentriereinrichtung und das hiermit durchzuführende erfindungsgemäße Verfahren;
- Fig. 2: weitere Ausführungsformen der erfindungsgemäßen Bauteilzentriereinrichtung;
- Fig. 3: Ausführungsformen von erfindungsgemäßen Bauteilzentriereinrichtungen mit Dämpfungselementen.

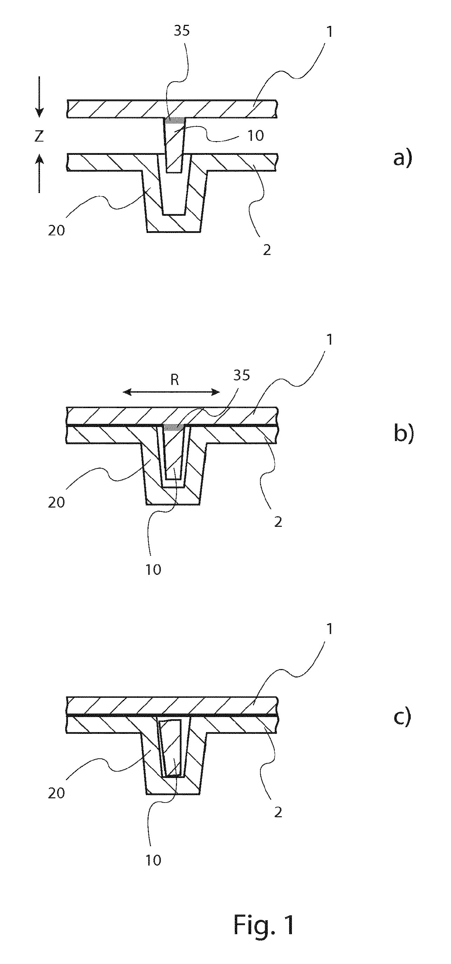

Fig. 1 zeigt drei wesentliche Schritte des erfindungsgemäßen Verfahrens, welches unterVerwendung einer erfindungsgemäßen Bauteilzentriereinrichtung und in Bezug auf einen Reibschweißvorgang dargestellt ist. Wie in Fig. 1a) gezeigt ist, erfolgt in dieser Darstellung das im Wesentlichen satte aneinander in Anlage bringen des ersten Bauteils 1 mit dem zweiten Bauteil 2 durch ein Zusammenführen Z der Bauteile in der durch die Pfeile gezeigten Richtung. Hierbei wird auch der Zentriervorsprung 10 in die Zentrierausnehmung 20 "eingefahren", so dass diese nach dem aneinander anlegen der beiden Bauteile 1, 2 im wesentliche vollständig miteinander in Eingriff stehen. Dieser Zustand ist in Fig. 1b) gezeigt. Dies gewährleistet die erfindungsgemäß gewünschte Zentrierung der beiden Bauteile 1, 2 zueinander.

Am Fuß des Zentriervorsprungs 10 ist der Trennbereich 35 angeordnet, an welchem eine Art Sollbruchstelle vorgesehen ist, beispielsweise durch ein Anspritzen des Zentriervorsprungs 10 an das erste Bauteil 1 in einem Mehrgang-Spritzgußverfahren. Wie aus der Fig. 1b) erkennbar ist, kommt derTrennbereich 35 in etwa im Bereich derdie Zentrierausnehmung im wesentlichen begrenzenden Schultern am Bauteil 2 zu liegen.

Beginnt nun, wie in Fig. 1b) angedeutet der Reibschweißprozess R, so wird bei Überschreitung einer Grenzamplitude der Trennbereich 35 des Zentriervorsprungs durch die vermittels der Reibschweißmaschine auf das Bauteil 1 aufgebrachte Querkraft entlang der in Fig. 1b) gezeigten Pfeile, bei Überschreitung der definierten Querkraft des Trennbereichs 35, abgeschert und hierdurch der Zentriervorsprung 10 vom ersten Bauteil 1 abgetrennt. Der abgescherte Zentriervorsprung 10 kommt innerhalb der Zentrierausnehmung 20 zu liegen und verbleibt bei der gezeigten Ausführungsform in der fertig verschweißten Kunststoffkomponente (vgl. Fig. 1c)).

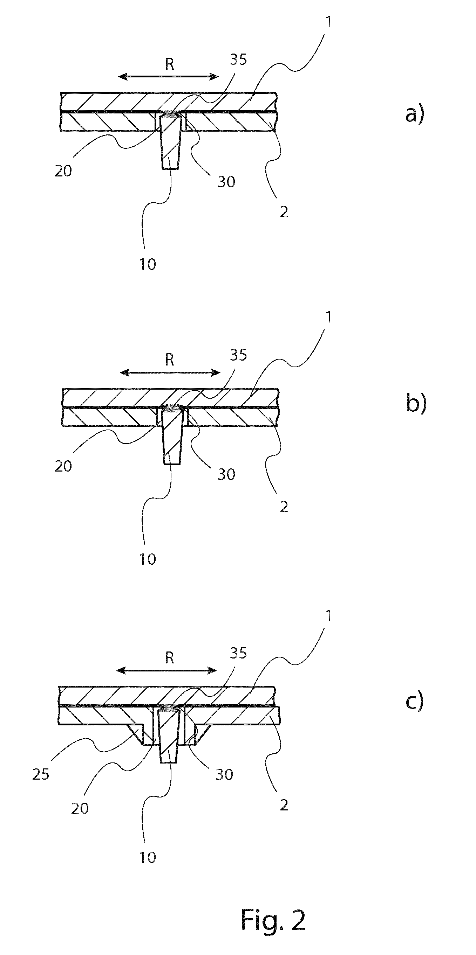

Die Figuren 2a) bis c) zeigen weitere Ausführungsformen der vorliegenden Erfindung (insbesondere in der in Fig. 1b) gezeigten Verarbeitungsposition), bei welchen die Zentrierausnehmung 20 als Durchführung am zweiten Bauteil 2 ausgeführt ist. Allen drei Ausführungsformen gemäß den Figuren 2a) bis c) ist gemein, dass der Zentriervorsprung 10 nach seinem Abtrennen im Trennbereich 35 entgegen der in Fig. 1 gezeigten Ausführungsform aus der fertigen Kunststoffkomponente heraus fällt und aufgefangen bzw. zurück gehalten werden kann.

Bei der in Fig. 2a) gezeigten Ausführungsform weist der Zentriervorsprung 10 an seinem Fuß und im Bereich des Trennbereichs 35 eine Einschnürung 30 auf, welche dazu vorgesehen ist, das abtrennen des Zentriervorsprungs während des Reibschweißprozesses zu erleichtern, also die definierte Querkraft zu verringern. Bei dieser Ausführungsform erfolgt zudem kein ausschließliches Abscheren des Zentriervorsprungs 10 durch die Schulter der Zentrierausnehmung im Trennbereich 35 sondern zudem ein Abknicken des Zentriervorsprungs durch einen Kontakt des Zentriervorsprungs 10 mit der Wandung der Zentrierausnehmung 20.

Die in Fig. 2b) gezeigte Ausführungsform unterscheidet sich demgegenüber dadurch, dass die Einschnürung des Zentriervorsprungs 10 durch die Oberflächenebene des ersten Bauteils 1 hindurch in dieses hinein versetzt ist. Die Einschnürung und damit auch zumindest ein Teil des Trennbereichs 35 liegt also quasi "zurückversetzt" hinter die Oberflächenebene des ersten Bauteils 1 bzw. in dieses hinein versetzt. Diese Variante erlaubt es, sicher zu stellen, dass ein evtl. nach dem Abtrennen des Zentriervorsprungs 10 verbleibender Materialüberstand des Trennbereichs 35 nicht über die Oberflächenebene des ersten Bauteils 1 heraus steht und damit die sichere Verschweißung der Anlageflächen der ersten und zweiten Bauteile 1, 2 gewährleistet ist.

Die Fig. 2c) zeigt eine Ausführungsform, die hinsichtlich des Zentriervorsprungs 10 der der Fig. 2a) entspricht, bei welcher jedoch die Zentrierausnehmung 20 als zylindrisches Element ausgestaltet ist, welches sich im Wesentlichen orthogonal zur Ebene des zweiten Bauteils erstreckt. Die Wandungen der Zentrierausnehmung 20 sind dabei durch Stützrippen 25 bei einer Einwirkung einer Querkraft gegen ein umkippen gegen das zweite Bauteil 2 abgestützt, so dass auch bei einer verhältnismäßig hohen definierten Querkraft des Trennbereichs 35 des Zentriervorsprungs 10 ein Abtrennen desselben gewährleistet ist.

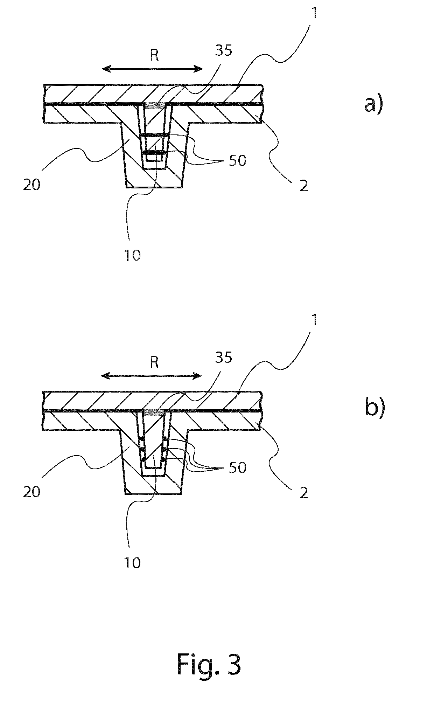

Die Figuren 3a) und b) zeigen Ausführungsformen, bei welchen am Zentriervorsprung 10 Dämpfungselemente 50 in Form von den Zentriervorsprung 10 vollständig durchsetzenden Elastomer-Abschnitten (vgl. Fig. 3a)) oder aber sich ringförmig um diesen herum erstreckenden Elastomer-Ringen vorgesehen sind (vgl. Fig. 3b)). Gleichermaßen können in ähnlicher Weise wie in Fig. 3b) dargestellt auch Elastomer-Punkte an der Oberfläche des Zentriervorsprungs 10 vorgesehen sein. In den in Fig. 3a) und b) gezeigten Fällen wurde durch das Zusammenfügen Z des ersten und zweiten Bauteils 1, 2 eine kraftschlüssige Verbindung zwischen dem Zentriervorsprung 10 und der Zentrierausnehmung 20 hergestellt, so dass der Zentriervorsprung 10 nnerhalb der Zentrierausnehmung 20 durch die Dämpfungselemente 50 "verklemmt" ist. Nach dem Abscheren des Zentriervorsprungs 10 im Trennbereich 35 erfolgt deshalb kein loses hineinfallen des Zentriervorsprungs 10 in die Zentrierausnehmung 20 sondern dieser bleibt in der Zentrierausnehmung verklemmt und im wesentlichen unbeweglich, so dass ein ungewünschtes Klappern des Zentriervorsprungs 10 in der fertig verschweißten Kunststoffkomponente vermieden wird.

## Patentansprüche

1. Bauteilzentrierungseinrichtung fürzu fügende Bauteile, vorzugsweise Kunststoffbauteile, aufweisend:
wenigstens einen an einem ersten Bauteil (1) angeordneten stiftförmigen Zentriervorsprung (10) und wenigstens eine hierzu korrespondierende, an einem zweiten Bauteil (2) angeordnete Zentrierausnehmung (20), wobei vor Beginn des Fügeprozesses das erste und
zweite Bauteil (1, 2) im Wesentlichen satt aneinander in Anlage gebracht werden, so dass jeder Zentriervorsprung (10) in eine jeweils korrespondierende Zentrierausnehmung (20) im wesentlichen vollständig eingreift,
**dadurch gekennzeichnet, dass**
im Bereich des Fußes des Zentriervorsprungs (10) ein Trennbereich (35) vorgesehen ist, in welchem der Zentriervorsprung (10) vom ersten Bauteil (1) durch eine definierte Querkraft trennbar ist, und
eine Trennung des Zentriervorsprungs (10) vom ersten Bauteil (1) durch eine während des Fügeprozesses auf den Zentriervorsprung (10) wirkende Querkraft, die größer als die definierte Querkraft ist erfolgt.

2. Bauteilzentrierungseinrichtung gemäß Anspruch 1,
**dadurch gekennzeichnet, dass**
der am ersten Bauteil (1) angeordnete Zentriervorsprung (10) einstückig mit dem Bauteil (1) ist.

3. Bauteilzentrierungseinrichtung gemäß einem der vorhergehenden Ansprüche,
**dadurch gekennzeichnet, dass**
die Zentrierausnehmung (20) topfförmig ausgebildet ist und, optional, zum Topfboden hin konisch zulaufend ausgebildet ist.

4. Bauteilzentrierungseinrichtung gemäß einem der Ansprüche 1 oder 2,
**dadurch gekennzeichnet, dass**
die Zentrierausnehmung (20) eine Durchführung durch das zweite Bauteil (2) ist.

5. Bauteilzentrierungseinrichtung gemäß einem der vorhergehenden Ansprüche,
**dadurch gekennzeichnet, dass**
zumindest Teilbereiche der die Zentrierausnehmung (20) begrenzenden Wandung durch Stützrippen (25) verstärkt sind.

6. Bauteilzentrierungseinrichtung gemäß einem der vorhergehenden Ansprüche,
**dadurch gekennzeichnet, dass**
der Zentriervorsprung (10) im Bereich seines Fußes eine radiale Einschnürung oder Einkerbung (30) aufweist und, optional, die radiale Einschnürung bzw. Einkerbung (30) durch die Oberflächenebene des ersten Bauteils (1) hindurch in dieses hinein versetzt ist.

7. Bauteilzentrierungseinrichtung gemäß einem der vorhergehenden Ansprüche,
**dadurch gekennzeichnet, dass**
der Zentriervorsprung (10) mit dem ersten Bauteil (1) stoffschlüssig verbunden ist, beispielsweise durch Anspritzen, Schweißen, kalt-Schweißen, Vulkanisieren, oder Kleben.

8. Bauteilzentrierungseinrichtung gemäß Anspruch 7,
**dadurch gekennzeichnet, dass**
der Zentriervorsprung (10) in einem Spritzgussprozess in einem weiteren Spritzgang an das in einem vorhergehenden Spritzgang gebildete erste Bauteil (1) im gleichen Werkzeug angespritzt wird.

9. Bauteilzentrierungseinrichtung gemäß einem der vorhergehenden Ansprüche,
**dadurch gekennzeichnet, dass**
der Zentriervorsprung (10) und/oder der Trennbereich (35) aus einem Material gefertigt ist, welches Materialeigenschaften aufweist, die verschieden sind von den Materialeigenschaften des ersten Bauteils (1), beispielsweise eine verschiedene Elastizität, spezifische Dichte, Sprödigkeit, Härte, oder Plastizität.

10. Bauteilzentrierungseinrichtung gemäß einem der vorhergehenden Ansprüche,
**dadurch gekennzeichnet, dass**
der Zentriervorsprung (10) und die jeweils hierzu korrespondierende Zentrierausnehmung (20) einen kreisförmigen, elliptischen, dreieckigen, rechteckigen oder kreuzförmigen Querschnitt aufweisen.

11. Bauteilzentrierungseinrichtung gemäß einem der vorhergehenden Ansprüche,
**dadurch gekennzeichnet, dass**
der Zentriervorsprung (10) einen in Richtung vom ersten Bauteil (1) weg sich verringernden, vorzugsweise kegelstumpfförmig zulaufenden Querschnitt aufweist.

12. Bauteilzentrierungseinrichtung gemäß einem der vorhergehenden Ansprüche,
**dadurch gekennzeichnet, dass**
am Zentriervorsprung (10) wenigstens ein Dämpfungselement (50) vorgesehen ist, welches sich über den Durchmesser des Zentrierelements (10) hinaus erstreckt und, optional, der kraftschlüssigen Aufnahme des Zentriervorsprungs (10) innerhalb der Zentrierausnehmung (20) dient.

13. Fügeverfahren zur maßhaltigen Verbindung von Kunststoffbauteilen unter Verwendung einer Bauteilzentrierungseinrichtung gemäß einem der vorhergehenden Ansprüche, aufweisend:
Einbringen des ersten und zweiten Bauteils (1, 2) in eine Fügemaschine, wobei das erste und zweite Bauteil (1, 2) so zueinander angeordnet und zusammengeführt (Z) werden, dass jeder Zentriervorsprung (10) in eine jeweils korrespondierende Zentrierausnehmung (20) im wesentlichen vollständig eingreift;
Zufahren der Bauteilaufnahmen der Fügemaschine, so dass das erste und zweite Bauteil (1, 2) im Wesentlichen satt aneinander in Anlage gebracht werden und fixieren der Bauteile in den Bauteilaufnahmen;
Starten des Fügeprozesses, wobei während des Fügeprozesses eine auf den Zentriervorsprung (10) wirkende Querkraft wirkt, die größer als die definierte Querkraft ist und hierdurch ein Abtrennen des Zentriervorsprungs (10) vom ersten Bauteil (1) im Trennbereich (35) erfolgt.

14. Fügeverfahren gemäß Anspruch 13, wobei der Fügeprozess ein Reibschweißprozess (R) ist.

15. Verwendung einer Bauteilzentrierungseinrichtung gemäß einem der Ansprüche 1 bis 12 beim Reibverschweißen von mit Verzug beaufschlagten Kunststoffbauteilen.
